# EUROPÄISCHE PATENTSCHRIFT

(11) **EP 2 550 225 B1**
(45) Veröffentlichungstag und Bekanntmachung des Hinweises auf die Patenterteilung: **07.05.2014**
(21) Anmeldenummer: 11710759.9
(22) Anmeldetag: 23.03.2011
(51) Int. Cl.: B66C 1/08, F03D 1/00, B66C 1/10, B66C 1/12

(54) **HEBEEINHEIT ZUM HEBEN EINES ROTORS EINER WINDENERGIEANLAGE**
LIFTING UNIT FOR LIFTING OF A ROTOR OF A WINDTURBINE
ÉLÉVATEUR D'UN ROTOR D'UNE TURBINE ÉOLIENNE

(30) Priorität: 23.03.2010 DE 202010004093 U
(43) Veröffentlichungstag der Anmeldung: 30.01.2013
(73) Patentinhaber: Wobben Properties GmbH, 26605 Aurich (DE)
(72) Erfinder: LÜLKER, Frank, 26603 Aurich (DE)
(74) Vertreter: Eisenführ Speiser
(86) Internationale Anmeldenummer: PCT/EP2011/054432
(87) Internationale Veröffentlichungsnummer: WO 2011/117290

(56) Entgegenhaltungen:
- EP-A1- 2 003 333
- DE-U1-202010 003 033
- US-A1- 2010 028 152

## Beschreibung

Die vorliegende Erfindung betrifft eine Hebeeinheit zum Heben eines Rotors einer Windenergieanlage.

Eine Hebeeinheit kann zu einer Montage eines Rotors an einer Gondel mit daran angebrachten Rotorblättern verwendet werden.

Es ist somit eine Aufgabe der vorliegenden Erfindung, eine Hebeeinheit vorzusehen, die bei der Montage eines Rotors inklusive der Rotorblätter an der Gondel auf einem Turm einer Windenergieanlage verwendet werden kann. Eine vorrichtung gemäß dem Oberbegriff des Anspruchs 1 ist aus EP 203 333 A1 bekannt. Diese Aufgabe wird durch eine Hebeeinheit gemäß Anspruch 1 gelöst.

Somit wird eine Hebeeinheit zum Heben eines Rotors einer Windenergieanlage vorgesehen. Die Hebeeinheit weist mindestens eine erste Schlinge zum Umschlingen um einen Rotorblattwurzel-nahen Bereich eines Rotorblatts an einem Rotor der Windenergieanlage, mindestens eine Querstrebe, mindestens eine erste und zweite Strebe oder Teilschlinge und mindestens eine erste und zweite Gelenkeinheit auf. Die mindestens eine erste und zweite Strebe bzw. Teilschlinge erstrecken sich zwischen der mindestens einen ersten und zweiten Gelenkeinheit und der Querstrebe. Die Hebeeinheit weist ferner mindestens eine zweite Schlinge auf, welche eine erste und zweite Teilschlinge und eine Strebe aufweist. Die ersten Enden der ersten und zweiten Teilschlinge sind an der ersten und zweiten Gelenkeinheit befestigt. Die zweite Schlinge ist dazu ausgestaltet, um einen Rotorblattstumpf herum angeordnet zu werden.

Gemäß einem Aspekt der vorliegenden Erfindung ist die Länge der Querstrebe derart vorgesehen, dass die erste und zweite Gelenkeinheit nicht mit den Rotorblättern oder dem Rotor der Windenergieanlage in Berührung kommen.

Gemäß einem weiteren Aspekt der vorliegenden Erfindung weist die erste und zweite Gelenkeinheit ein erstes, zweites und drittes Ende auf. Die zweite Schlinge ist mit dem dritten Ende gekoppelt. Die erste Schlinge ist mit dem zweiten Ende und die erste und zweite Teilschlinge ist mit dem dritten Ende der Gelenkeinheit gekoppelt. Das dritte Ende ist drehbar bzw. schwenkbar an dem zweiten Ende gekoppelt.

Mittels der erfindungsgemäßen Hebeeinheit kann beispielsweise ein Spinner bzw. ein Rotor einer Windenergieanlage inklusive der Rotorblätter montiert werden.

Die Hebeeinheit weist vorzugsweise zwei Schlingen auf, welche sich im Bereich der Blattwurzel des Rotorblattes um das Rotorblatt herum erstrecken können. Diese Schlingen können dann über Zwischenteile bzw. Zwischenelemente bzw. Gelenkeinheiten mit einem Kranhaken verbunden werden, so dass der Rotor bzw. der Spinner inklusive z. B. drei an dem Rotor angebrachten Rotorblättern hochgezogen werden kann. Die beiden Schlingen, welche im Rotorblattwurzelbereich des Rotorblattes um das Rotorblatt herum vorgesehen sind, dienen dazu, die Last beim Anheben der gesamten Konstruktion zu tragen. Die Hebeeinheit soll dazu dienen, den Rotor plus die drei zumindest teilweise angebrachten Rotorblätter vom Boden aufzunehmen und bis zur Gondel auf den Turm der Windenergieanlage zu befördern.

Weitere Ausgestaltungen der Erfindung sind Gegenstand der Unteransprüche.

Vorteile und Ausführungsbeispiele der Erfindung werden nachstehend unter Bezugnahme auf die Zeichnung näher beschrieben.
- Fig. 1: zeigt eine schematische Darstellung einer Hebeeinheit gemäß einem ersten Ausführungsbeispiel,
- Fig. 2A bis 2C: zeigen verschiedene Ansichten einer Gelenkeinheit der Hebeeinheit von Fig. 1, und
- Fig. 3: zeigt eine schematische Darstellung einer Hebeeinheit gemäß einem ersten Ausführungsbeispiel mit einem Rotorblatt und einem Rotor einer Windenergieanlage.

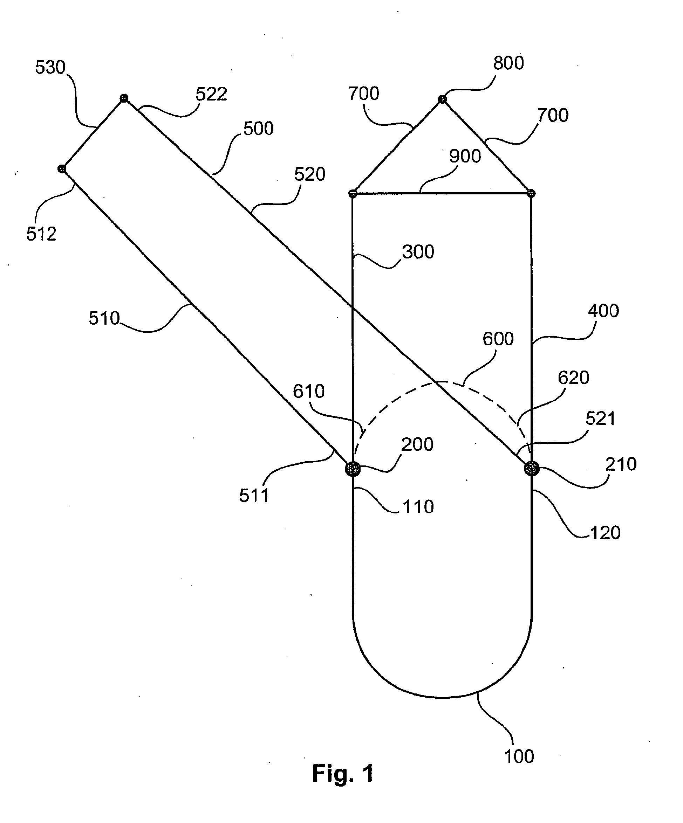

Fig. 1 zeigt eine schematische Darstellung einer Hebeeinheit gemäß einem ersten Ausführungsbeispiel. Die Hebeeinheit weist eine erste Schlinge 100 mit einem ersten und zweiten Ende 110, 120, eine erste und zweite Strebe oder Teilschlinge 300, 400 jeweils mit einem ersten und zweiten Ende 310, 320; 410, 420, eine erste und zweite Gelenkeinheit 200 und eine Verbindungsstange bzw. Querstrebe 900 zwischen den zweiten Enden der ersten und zweiten Strebe 300, 400 auf. Das erste Ende 110 der ersten Schlinge 100 ist mit dem ersten Gelenk 200 und das zweite Ende 120 der ersten Schlinge 100 ist mit dem zweiten Gelenk 210 verbunden. Ferner sind die ersten Enden 310, 410 der ersten und zweiten Strebe 300, 400 jeweils mit dem ersten und zweiten Gelenk 200, 210 verbunden. Die Hebeeinheit weist ferner eine zweite Schlinge 500 auf, welche einen ersten und zweiten Sling bzw. Teilschlinge 510, 520 aufweist. Die erste und zweite Teilschlinge 510, 520 weisen jeweils ein erstes und zweites Ende 511, 521 und ein zweites Ende 512, 522 auf. Die zweiten Enden 512, 522 des ersten und zweiten Slings 510, 520 sind über eine dritte Strebe 530 miteinander verbunden.

Das erste und zweite Gelenk 200, 210 weisen ein erstes Ende zur Aufnahme eines Endes der ersten Schlinge 100, ein zweites Ende zur Aufnahme der ersten Enden der ersten und zweiten Strebe 300, 400 sowie ein drittes Ende zur Aufnahme der ersten Enden 511, 521 der ersten und zweiten Teilschlinge 510, 520 auf. Hierbei ist das dritte Ende drehbar bzw. verschwenkbar zu dem ersten oder zweiten Ende (vorzugsweise zu dem zweiten Ende) ausgestaltet.

Die erste und zweite Strebe 300, 400 können auch als Teilschlingen ausgestaltet sein.

Die erste Schlinge 100 dient dazu, an der der Rotorblattwurzel zugewandten Seite bzw. Ende des Rotorblattes einer Windenergieanlage angeordnet zu werden. Die erste Schlinge 100 ist daher derart ausgestaltet, dass sie sich um den Bereich der Rotorblattwurzel des Rotorblattes herum anschmiegen kann.

Die Querstrebe 900 ist vorzugsweise derart in ihrer Länge ausgestaltet, dass die erste und zweite Gelenkeinheit 200, 210 nicht das Rotorblatt bzw. den Spinner berühren und somit beschädigen können. Ferner ist die dritte Strebe 530 in ihrer Länge derart ausgestaltet, dass die ersten und zweiten Teilschlingen 510, 520 zu keinem Zeitpunkt das Rotorblatt bzw. einen ersten Abschnitt des Rotorblattes berühren können.

Die dritte Strebe 530 wird vorzugsweise an einem der Rotorblattwurzel entgegengesetzten Ende eines Rotorblattstumpfes eines Rotorblattes einer Windenergieanlage (d. h. das Rotorblatt kann mehrteilig ausgestaltet sein und der Rotorblattstumpf wird zusammen mit dem Rotor der Windenergieanlage durch die Hebeeinheit an der Gondel montiert) angeordnet, so dass die Teitschlingen 510, 520 sich zwischen der ersten und zweiten Gelenkeinheit 200, 210 und der dritten Strebe 530 erstrecken, ohne dabei das Rotorblatt zu berühren.

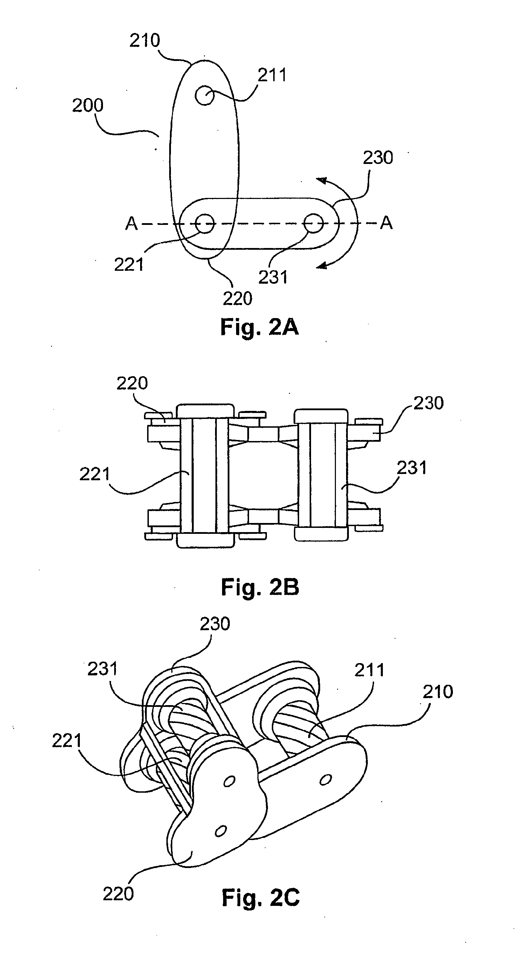

Fig. 2A bis Fig. 2C zeigen verschiedene Ansichten der Gelenkeinheiten gemäß dem ersten Ausführungsbeispiel.

Fig. 2A zeigt eine schematische Seitenansicht der Gelenkeinheit 200 gemäß dem ersten Ausführungsbeispiel. Die Gelenkeinheit weist ein erstes, ein zweites und ein drittes Ende 210, 220 und 230 auf. Hierbei ist das erste Ende 210 mit dem zweiten Ende 220 und das dritte Ende 230 mit dem zweiten Ende 220 verbunden. Das dritte Ende 230 ist hierbei derart mit dem zweiten Ende 220 verbunden, dass es um das zweite Ende 220 drehbar bzw. verschwenkbar ausgestaltet ist. An dem ersten Ende 210 ist eine erste Stange 211, an dem zweiten Ende 220 ist eine zweite Stange 221 und an dem dritten Ende 230 ist eine dritte Stange 231 vorgesehen.

Fig. 2B zeigt einen Querschnitt entlang der Linie A-A von Fig. 2A. In Fig. 2A sind die Stange 221 und die Stange 231 gezeigt.

Fig. 2C zeigt eine perspektivische Ansicht der Gelenkeinheit gemäß dem ersten Ausführungsbeispiel. Die Gelenkeinheit weist ein erstes Ende 210, ein zweites Ende 220 und ein drittes Ende 230 auf. Hierbei ist das dritte Ende 230 drehbar bzw. verschwenkbar mit dem zweiten Ende 220 verbunden. Das dritte Ende 230 mit der Stange 231 dient der Aufnahme der ersten Enden der ersten und zweiten Stange 300, 400.

Das erste Ende 210 dient der Aufnahme des ersten oder zweiten Endes 110, 120 des ersten Slings 100 und das zweite Ende 220 mit der Stange 221 dient der Aufnahme des ersten oder zweiten Slings 510, 520.

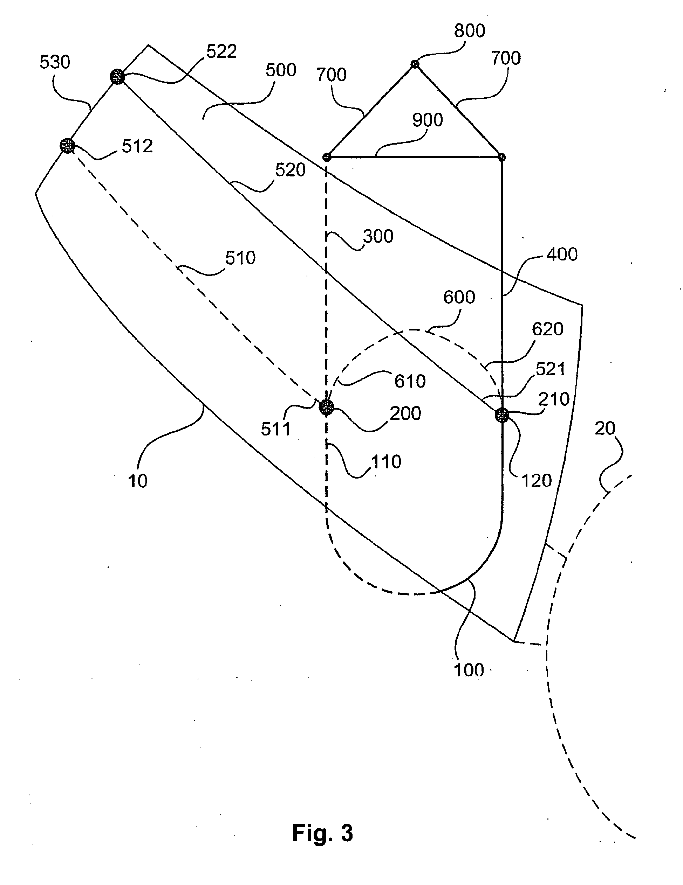

Fig. 3 zeigt eine schematische Darstellung der Hebeeinheit gemäß einem ersten Ausführungsbeispiel zusammen mit einem Rotorblatt und einem Gondelgehäuse einer Windenergieanlage. Die Windenergieanlage weist ein Rotorblatt bzw. einen Rotorblattstumpf sowie eine Gondel bzw. ein Gondelgehäuse 20 auf. Das Rotorblatt ist an seiner einen Seite mit der Gondel 20 verbunden. Die erste Schlinge 100 wird um die Rotorblattnase herum geführt. Eine zweite Schlinge 500 wird um den Rotorblattstumpf herum geführt. Somit liegt die dritte Strebe 530 an einem Ende des Rotorblattes (Stumpfende) an. Die erste Strebe bzw. Teilschlinge 300 wird hinter dem Rotorblatt geführt und die zweite Strebe bzw. Teilschlinge 400 wird vor dem Rotorblatt (in Fig. 3) geführt. So kann die Hebeeinheit gemäß dem ersten Ausführungsbeispiel ein Rotorblatt einer Windenergieanlage aufnehmen.

Vorzugsweise werden zwei Hebeeinheiten gemäß dem ersten Ausführungsbeispiel verwendet, um eine Gondel sowie daran befestigte Rotorblätter zur Montage der Windenergieanlage zu heben. Beispielsweise kann ein Kranhaken an dem Teil 800 eingreifen, um die beiden Hebeeinheiten des Rotors der Windenergieanlage zu heben.

Die erfindungsgemäße Hebeeinheit ist vorteilhaft, weil sie erlaubt, einen Rotor einer Windenergieanlage aus einem liegenden Zustand (der Rotor liegt auf dem Boden) zu heben. Durch die Ausgestaltung der Gelenkeinheiten 200, 210 ist es möglich, dass die Hebeeinheit bzw. die erste Schlinge 100 nicht entlang des Rotorblattes schrammt bzw. verrutscht. Dies kann auch dadurch erreicht werden, dass die Rotorblätter 10 drehbar an dem Gondelgehäuse bzw. dem Spinner befestigt sind.

## Patentansprüche

1. Hebeeinheit zum Heben eines Rotors einer Windenergieanlage mit mindestens einem Rotorblatt, mit
mindestens einer ersten Schlinge (100) zum Umschlingen um einen Rotorblattwurzel-nahen Bereich eines Rotorblattes an einem Rotor der Windenergieanlage,
mindestens einer Querstrebe (900),
mindestens einer ersten und zweiten Strebe oder Teilschlinge (300, 400), und
mindestens einer ersten und zweiten Gelenkeinheit (200, 210), wobei die erste und zweite Strebe bzw. Teilschlinge (300, 400) sich zwischen der ersten und zweiten Gelenkeinheit (200, 210) und der Querstrebe (900) erstrecken, **gekennzeichnet durch**
mindestens eine zweite Schlinge (500), welche eine erste und zweite Teilschlinge (510, 520) und eine Strebe (530) aufweist, wobei die ersten Enden der ersten und zweiten Teilschlinge (510, 520) an der ersten und zweiten Gelenkeinheit (200, 210) befestigt sind, wobei die zweite Schlinge (500) dazu ausgestaltet ist, um einen Rotorblattstumpf herum angeordnet zu werden.

2. Hebeeinheit nach Anspruch 1, wobei die Querstrebe (900) derart in ihrer Länge ausgestaltet ist, dass die erste und zweite Gelenkeinheit (200, 210) nicht mit den Rotorblättern oder dem Rotor der Windenergieanlage in Berührung kommen.

3. Hebeeinheit nach Anspruch 1 oder 2, wobei die erste und zweite Gelenkeinheit (200, 210) ein erstes, zweites und drittes Ende (210, 220, 230) aufweist, wobei die zweite Schlinge (500) mit dem dritten Ende (230) gekoppelt ist, wobei die erste Schlinge (100) mit dem zweiten Ende und die erste und zweite Teilschlinge (300, 400) mit dem ersten Ende gekoppelt ist,
wobei das dritte Ende (230) drehbar bzw. schwenkbar an dem zweiten Ende (220) gekoppelt ist.

## Claims

1. A lifting unit for lifting a rotor of a wind power installation with at least one rotor blade, comprising
at least one first sling (100) for looping around a region of a rotor blade on a rotor of the wind power installation, which region is near the rotor blade root,
at least one transverse strut (900),
at least one first and second strut or sling portion (300, 400), and
at least one first and second hinge unit (200, 210), wherein the first and second struts or sling portions (300, 400) extend between the first and second hinge units (200, 210) and the transverse strut (900), **characterized by**
at least one second sling (500) having first and second sling portions (510, 520) and a strut (530), wherein the first ends of the first and second sling portions (510, 520) are fixed to the first and second hinge units (200, 210), wherein the second sling (500) is adapted to be arranged around a rotor blade stub.

2. A lifting unit according to claim 1 wherein the transverse strut (900) is of such a length that the first and second hinge units (200, 210) do not come into contact with the rotor blades or the rotor of the wind power installation.

3. A lifting unit according to claim 1 or claim 2 wherein the first and second hinge units (200, 210) have a first, a second and a third end (210, 220, 230), wherein the second sling (500) is coupled to the third end (230), the first sling (100) is coupled to the second end and the first and second sling portions (300, 400) are coupled to the first end,
wherein the third end (230) is rotatably or pivotably coupled to the second end (220).

## Revendications

1. Unité d'élévation pour élever un rotor d'une turbine éolienne avec au moins une lame de rotor, avec
au moins une première boucle (100) pour enrouler un domaine proche de la racine de la lame de rotor d'une lame de rotor autour d'un des rotors de l'éolienne,
au moins une traverse (900),
au moins une première et une deuxième potence ou chalut (300, 400), et au moins une première et une deuxième unité d'articulation (200, 210), où la première et la deuxième potence respectivement chalut (300, 400) s'étendent entre la première et la deuxième unité d'articulation (200, 210) et la traverse (900), **caractérisé en ce que**
au moins une deuxième boucle (500), comprenant un premier et un deuxième chalut (510, 520) et une potence (530), où les premières extrémités des premier et deuxième chaluts (510, 520) sont attachés à la première et à la deuxième unité d'articulation (200, 210), où la deuxième boucle (500) est conçue de sorte à pouvoir être aménagée autour d'un embout de la lame de rotor.

2. Unité d'élévation selon la revendication 1, dans lequel la traverse (900) est disposée longitudinalement de sorte que la première et la deuxième unité d'articulation (200, 210) n'entrent pas en contact avec les lames de rotor ou le rotor de l'éolienne.

3. Unité d'élévation selon la revendication 1 ou 2, dans lequel la première et la deuxième unité d'articulation (200, 210) comprennent une première, deuxième et troisième extrémités (210, 220, 230), dans lesquelles la deuxième boucle (500) est couplée à la troisième extrémité (230), où la première boucle (100) est couplée avec la deuxième extrémité et les premier et deuxième chalut (300, 400) sont couplés avec la première extrémité,
où la troisième extrémité (230) est couplée à la deuxième extrémité (200) de façon rotative ou pivotante.
